# FASCICULE DE BREVET EUROPEEN

(11) **EP 0 919 003 B1**
(45) Date de publication et mention de la délivrance du brevet: **19.06.2002**
(21) Numéro de dépôt: 97936756.2
(22) Date de dépôt: 08.08.1997
(51) Int. Cl.: G02B 1/04, B29D 11/00

(54) **PROCEDE D'INCORPORATION D'ADDITIFS DANS UN ARTICLE OPHTALMIQUE AU MOYEN D'UN FLUIDE A L'ETAT SUPERCRITIQUE**
VERFAHREN ZUR INKORPORATION VON ZUSATZEN IN EINEM OPHTALMISCHEN ARTIKEL MIT HILFE EINER FLÜSSIGKEIT IM ÜBERKRITISCHEM ZUSTAND
METHOD FOR INCORPORATING ADDITIVES INTO AN OPHTHALMIC ARTICLE BY MEANS OF A FLUID IN SUPERCRITICAL STATE

(30) Priorité: 14.08.1996 FR 9610229
(43) Date de publication de la demande: 02.06.1999
(73) Titulaire: ESSILOR INTERNATIONAL COMPAGNIE GENERALE D'OPTIQUE, 94227 Charenton cédex (FR)
(72) Inventeur: BAILLET, Gilles, 75020 Paris (FR); CANO, Jean-Paul, Southbridge, MA 01550 (US); MAGNE, Jean-François, 94000 Créteil (FR)
(74) Mandataire: Catherine, Alain
(86) Numéro de dépôt international: FR9701469
(87) Numéro de publication internationale: WO9807054

(56) Documents cités:
- WO-A-95/20476
- US-A- 4 286 957
- US-A- 4 820 752
- US-A- 5 250 078

## Description

La présente invention concerne, d'une manière générale, un procédé d'incorporation d'additifs dans un article ophtalmique en verre organique au moyen d'un fluide à l'état supercritique.

Plus particulièrement, la présente invention concerne un procédé d'incorporation d'additifs tels que des stabilisants, des antioxydants. des antiozonants, des absorbeurs UV, des plastifiants, des colorants et des pigments (colorants et pigments classiques et substances photochromiques) dans des articles ophtalmiques finis ou semi-finis en polymères organiques transparents au moyen d'un fluide à l'état supercritique, par exemple du CO₂ à l'état supercritique.

Il existe différents procédés classiques pour incorporer un additif, en particulier une substance photochromique, dans un substrat en polymères organiques transparents d'un article ophtalmique.

Un premier procédé classique consiste à incorporer dans la composition transparente, liquide, de monomères les divers additifs, à couler entre les deux parties d'un moule la composition liquide de monomères dans laquelle sont incorporés les additifs puis à polymériser les monomères pour obtenir l'article ophtalmique comportant un substrat en verre organique clans lequel se trouvent inclus les additifs voulus. Cette technique présente plusieurs inconvénients. En particulier, lorsque les additifs sont des pigments photochromiques ou des absorbeurs UV, ce procédé nécessite une polymérisation par voie thermique puisque la présence de l'absorbeur UV et/ou des pigments photochromiques ne permet généralement pas ou très difficilement une polymérisation photochimique. Par ailleurs, il est pratiquement exclu d'incorporer des composés photochromiques dans le cas de l'utilisation de monomères allyliques, le procédé nécessitant l'emploi d'une concentration élevée en amorceur, des temps de polymérisation longs et des températures de polymérisation relativement élevées. Lorsque l'additif incorporé est une substance photochromique, les longues durées de polymérisation ainsi que les températures de polymérisation relativement élevées risquent d'entraîner une dégradation de la substance photochromique.

Par ailleurs, il n'est pas exclu qu'une dégradation de la substance photochromique soit générée par réaction de celle-ci avec des radicaux provenant d'amorceurs thermiques ou photochimiques.

Une autre technique usuelle, utilisée pour incorporer des colorants classiques dans un article ophtalmique, consiste à immerger l'article ophtalmique constitué d'un substrat transparent de polymères dans une dispersion aqueuse de particules insolubles de colorant et à chauffer à une température de l'ordre de 90°C pendant un temps suffisant pour faire pénétrer les particules de colorant dans la surface du substrat de polymères. Cette technique présente également plusieurs inconvénients. Tout d'abord, la dispersion a une durée de vie limitée et doit être rejetée au bout d'un temps relativement court conduisant à une perte importante en colorant ou nécessitant de coûteuses étapes de récupération du colorant. Ce procédé ne s'applique pas à tous les types de substrats ou matières polymères et nécessite, pour les substrats les plus résistants à la coloration, l'utilisation d'un agent vecteur agressif (par exemple des dérivés phénoliques) entraînant des problèmes de rejets et des risques de pollution de l'environnement. Enfin. l'incorporation du colorant reste superficielle, c'est-à-dire que le colorant pénètre peu profondément sous la surface du substrat, ce qui ne permet pas une coloration à coeur du substrat.

Une technique récemment développée, plus particulièrement pour l'introduction de substances photochromiques dans des articles ophtalmiques comprenant un substrat transparent de polymères, est la technique dite de "transfert thermique". Ce procédé de transfert thermique est décrit, entre autres, dans les documents US 4 286 957 et 4 880 667. Dans cette technique, une surface du substrat transparent de polymères est revêtue d'une couche d'un vernis contenant la substance photochromique à incorporer. Le substrat ainsi revêtu est alors traité thermiquement pour faire migrer la substance photochromique dans le substrat. Ce procédé également présente plusieurs inconvénients. Le temps de chauffage nécessaire pour faire migrer la substance photochromique est relativement long, de l'ordre de 5 heures. Seule une partie de la substance photochromique est introduite dans le substrat de sorte qu'il y a des pertes non négligeables en substance photochromique. Enfin, ce procédé ne permet qu'une faible profondeur de pénétration de la substance photochromique dans le substrat, au plus de l'ordre de 150 µm.

Dans le cas de l'incorporation d'une substance photochromique, il est souhaitable d'obtenir une pénétration la plus importante possible de cette substance dans le substrat. En effet, les couches profondes de substance photochromique jouent le rôle de réservoir. Ainsi, au fur et à mesure que les couches superficielles de substance photochromique perdent, sous l'effet d'irradiations UV répétées, leurs caractéristiques photochromiques, elles sont remplacées par des couches intactes sous-jacentes de substance photochromique, ce qui prolonge la durée de vie de l'article ophtalmique photochromique.

Le document US-A-4 598 006 décrit un procédé d'imprégnation d'un polymère thermoplastique avec un matériau d'imprégnation (à savoir un arôme, un agent de désinfection ou de dératisation ou une composition pharmaceutique) en dissolvant le matériau d'imprégnation dans un agent de gonflement volatil (par exemple, CO₂ maintenu aux ou près des conditions supercritiques), faisant gonfler le polymère thermoplastique en le mettant en contact avec l'agent de gonflement volatil à l'état ou proche de l'état supercritique contenant le matériau d'imprégnation, et en réduisant la pression pour que l'agent de gonflement volatil diffuse du polymère.

Les polymères servent uniquement de support à un produit actif qui doit ultérieurement être relargué d'une manière réglée.

Le document US-A-4 820 752 décrit un procédé pour infuser un additif dans un polymère en dissolvant l'additif clans un solvant fluide gazeux (par exemple CO₂) qui a un point d'ébullition inférieur à la température ambiante et une masse volumique d'au moins 0,01 g/cm³. en mettant en contact la solution de l'additif et le solvant fluide avec un matériau polymérique pendant un temps suffisant pour permettre l'absorption d'au moins une partie de la solution dans le matériau polymérique, et en séparant le solvant fluide du matériau polymérique en y laissant l'additif infusé.

Bien que ce document envisage l'utilisation d'un fluide à l'état supercritique, cette condition n'apparaît pas essentielle pour le procédé décrit. D'ailleurs, le seul exemple utilisant un fluide à l'état supercritique concerne l'incorporation de progestérone dans un substrat de polyuréthanne.

Le document US-A-5 340 614 décrit l'imprégnation dans un substrat de polymères d'additifs insolubles dans un fluide supercritique qui consiste à mettre simultanément en contact le substrat de polymère, l'additif d'imprégnation et un véhicule liquide. tel que de l'eau, en présence d'un fluide supercritique.

Le document WO 95/20476 décrit le traitement de lentilles ophtalmiques par un fluide à l'état supercritique pour en éliminer les matériaux incomplètement polymérisés.

Il serait donc souhaitable de disposer d'un procédé pour l'incorporation d'additifs dans des articles ophtalmiques finis et semi-finis comportant un substrat transparent de polymères qui puisse s'appliquer à tous types de polymères utilisables pour la fabrication d'articles ophtalmiques, permette de régler à volonté la profondeur de pénétration des additifs dans le substrat, et en particulier permette une pénétration à coeur des additifs même dans des substrats d'épaisseur relativement importante. En outre, ce procédé devrait permettre des temps de traitement courts, ne pas dégrader l'additif, en particulier ne pas nuire aux propriétés photochromiques lorsque l'additif incorporé est une substance photochromique, et ne pas dégrader les propriétés physiques et optiques ni la géométrie du substrat de polymères de l'article ophtalmique.

Ainsi, le procédé ne doit pas nuire en particulier à la géométrie du substrat de polymères, c'est-à-dire qu'il ne doit pas déformer le substrat de polymères à un point tel qu'il soit nécessaire de refaçonner l'article ophtalmique après l'incorporation de l'additif. Egalement, le procédé ne doit pas nuire aux propriétés avantageuses de l'article ophtalmique telles que la résistance aux rayures et à l'abrasion et la résistance aux chocs.

En outre, ce procédé doit permettre une incorporation homogène de l'additif au sein du substrat de polymères. L'additif introduit ne doit pas être sujet à un phénomène de relargage. Enfin, le procédé ne doit pas altérer la résistance au vieillissement de l'article ophtalmique.

Selon une premiére réalisation de l'invention, on a mis au point un procédé d'incorporation d'additifs dans un article ophtalmique fini ou semi-fini, comprenant un substrat transparent de polymères qui comprend :
- l'introduction dans un réacteur contenant l'article ophtalmique et l'additif à incorporer, d'un fluide à l'état supercritique;
- le maintien du fluide à l'état supercritique dans le réacteur, à l'état statique, pendant une durée prédéterminée pour obtenir l'incorporation de l'additif dans le substrat de polymères de l'article ophtalmique jusqu'à une profondeur prédéterminée;
- l'élimination du fluide à l'état supercritique; et
- la récupération de l'article ophtalmique dans lequel l'additif a été incorporé.

Une réalisation particulière du procédé selon l'invention concerne un procédé de photochromisation d'un article ophtalmique fini ou semi-fini comprenant un substrat transparent de polymères qui comprend :
A. une première étape comportant :
   - la mise en place dans un réacteur d'un substrat transparent de polymères et d'un plastifiant du substrat,
   - l'introduction dans le réacteur d'un fluide à l'état supercritique.
   - le maintien du fluide à l'état supercritique dans le réacteur à l'état statique, pendant une durée prédéterminée pour obtenir l'incorporation du plastifiant dans le substrat de polymères, et
   - l'élimination du fluide supercritique ; et
B. une second étape comportant :
   - la mise en place dans le réacteur contenant le substrat de polymères plastifié d'un ou plusieurs composés photochromiques,
   - l'introduction d'un fluide à l'état supercritique,
   - le maintien du fluide à l'état supercritique clans le réacteur à l'état statique, pendant une durée prédéterminée pour obtenir l'incorporation du ou des composés photochromiques dans le substrat de polymères plastifié de l'article ophtalmique jusqu'à une profondeur prédéterminée,
   - l'élimination du fluide supercritique, et
   - la récupération de l'article ophtalmique dans lequel sont incorporés le ou les composés photochromiques.

Les revendications dependantes définissent des modes de réalisation additionels.

L'invention va maintenant être décrite ci-après, à l'aide notamment des exemples 1 à 7 et également à l'aide des figures 1-6, où :

Fig.1 représente un dispositif utilisé lors d'une première réalisation de l'invention.

Fig.2 représente un réacteur tel que celui utilisé dans le dispositif de la Figure 1 ainsi que ses éléments associés.

Fig.3 et Fig.4 représentent repectivement les courbes d'absorption de la forme incolore et de la forme colorée des exemples 1 à 3.

Fig.5 et Fig.6 représentent repectivement les courbes de transmission temporelles des formes avec colorant bleu et colorant orange des exemples 1 à 3.

Les corps sont généralement connus sous trois états : solide, liquide et gazeux. On passe de l'un à l'autre de ces états en faisant varier la température et/ou la pression. Or, il existe un point au-delà 5 duquel on peut passer de l'état liquide à l'état gazeux ou vapeur sans passer par une ébullition ou à l'inverse par une condensation, donc sans changement : ce point est appelé le point critique.

Un fluide dans un état caractérisé, soit par une pression et une température respectivement supérieures à la pression et à la température critiques, dans le cas d'un corps pur, soit par un point représentatif (pression, température) situé au-delà de l'enveloppe des points critiques représentés sur un diagramme (pression, température) dans le cas d'un mélange, est dit à l'état supercritique.

Le dioxyde de carbone s'avère être un fluide particulièrement intéressant pour être utilisé comme fluide à l'état supercritique du fait de ses paramètres critiques (t_{c}=31°C P_{c}=7,3 MPa), de son absence de toxicité, de son caractère non polluant et de son faible coût.

Ainsi, on recommande l'utilisation de CO₂ à l'état supercritique comme fluide à l'état supercritique dans le procédé selon l'invention.

Les articles ophtalmiques qui peuvent être traités par le procédé de l'invention sont des articles finis ou semi-finis comprenant un substrat transparent de polymères.

Les articles ophtalmiques finis sont des articles ophtalmiques obtenus sous leur forme définitive, généralement par coulée de compositions polymérisables entre deux moules présentant des géométries de surface requises puis polymérisation. On obtient alors un article dont les deux faces se trouvent dans leur état final.

Il est fréquent de fabriquer des articles semi-finis comportant. après moulage, une seule face à sa géométrie finale, la deuxième face pouvant alors être surfacée à la demande.

Les articles ophtalmiques, selon l'invention, comprennent par exemple les verres de lunettes, verres solaires ou correcteurs, les lentilles de contact rigides ou souples et les lentilles de contact hydrogel à l'état sec.

Les articles ophtalmiques peuvent également, avant le traitement par le procédé de l'invention, comporter des couches de vernis anti-abrasion et d'augmentation de la résistance aux chocs sur une des surfaces du substrat transparent de polymères.

Le substrat transparent de polymères des articles ophtalmiques utilisables dans le procédé de l'invention, sont tous polymères, copolymères et mélanges transparents de ceux-ci, convenant pour la formation d'articles ophtalmiques.

Parmi les polymères et copolymères qui peuvent être utilisés dans la présente invention, on peut citer les polyméres allyliques, les polymères de polyol (allylcarbonates), les polyacrylates, les poly(alkylacrylates) tels que les poly(méthylméthacrylates) ou tels que les di(meth)acrylates de poly(éthoxy)bisphénol A, les polyuréthannes. les polythiouréthannes et les polycarbonates.

Les polymères et copolymères particulièrement recommandés sont les polycarbonates tels que le poly(4,4'-dioxyphényl-2,2-propane carbonate), le diméthacrylate de poly(éthoxy)bisphénol A, le polyéthylèneglycol diméthacrylate (PEG diméthacrylate), le poly (méthacrylate de méthyle), les poly(allylcarbonates) tels que le diéthylèneglycol bis(allylcarbonate) et ses copolymères.

Les polymères et copolymères utilisés pour la fabrication d'articles ophtalmiques sont bien connus et sont décrits, entre autres, dans les documents WO 95/10790 et EP-A1-0653428.

Les additifs que l'on peut incorporer dans le substrat de polymères des articles ophtalmiques au moyen du procédé selon l'invention, comprennent tous additifs généralement utilisés dans les substrats de polymères d'articles ophtalmiques et en particulier les absorbeurs UV, les absorbeurs infra-rouge, les matériaux pour écran laser, les stabilisants, les antioxydants, les plastifiants, colorants et pigments tels que les colorants et pigments usuels, les substances photochromiques, et leurs mélanges.

Les additifs particulièrement recommandés avec le procédé de la présente invention sont les colorants et pigments et tout spécialement les substances photochromiques.

Parmi les absorbeurs UV utilisables dans la présente invention, on peut citer les benzophénones, les dihydroxybenzophénones, les benzotriazoles. Parmi les agents stabilisants, on peut utiliser les amines à empêchement stérique.

Parmi les matériaux pour écran laser, on peut citer les complexes de porphyrine, les dérivés de la phtalocyanine et leurs mélanges. De tels matériaux sont décrits dans le document US-A-4,657,345.

Parmi les antioxydants utilisables dans la présente invention, on peut citer les antioxydants phénoliques tels que les monophénols, les bisphénols et les thiobisphénols, les phosphites tels que le 4,6-ditertiobutyl phényl phosphite et le triphényl phosphite, les phosphines telles que la triphénylphosphine.

Parmi les plastifiants utilisables dans la présente invention, on peut citer les phtalates linéaires ou ramifiés tels que les phtalates d'alcools en C₆-C₁₂, en particulier le phtalate de dioctyle (DOP) et les isophtalates comme le phtalate de diisodécyle (DIDP), le phtalate de diisononyle (DINP) et le phtalate de diisooctyle (DIOP) ainsi que le phtalate de butylbenzyle (BBP) et le phtalate de diisoundécyle (DIUP), les esters d'acides gras en C₁₈-C₃₀, tels que les adipates, sébaçates et azélates.

Parmi les colorants et pigments usuels, on peut utiliser tous colorants et pigments classiques pour la coloration d'articles ophtalmiques, tels qu'en particulier des pigments azoïques et anthraquinoniques. On utilise de préférence des pigments lipophiles.

Des colorants particulièrement utiles dans le procédé de la présente invention sont les substances photochromiques. Ces substances photochromiques sont bien connues dans la technique et sont des substances qui, lorsqu'elles sont irradiées par un faisceau lumineux, de longueurs d'onde appropriées, changent de couleur et reviennent à leur couleur originelle dès que l'irradiation cesse. Parmi les substances photochromiques utilisables, on peut citer les dérivés du benzopyrane (chromène), en particulier les naphtopyranes, et préférentiellement les diaryl[2H]napthopyranes, et les dérivés des spirooxazines. Les dérivés du chromène sont bien connus dans la technique et sont décrits entre autres dans le brevet des Etats Unis n° US-3 567 605, les demandes internationales n° 90//07507 et n° 91/00861, et les demandes de brevets européens EP-0246114 et EP-0401958.

Les dérivés des spirooxazines sont également bien connus et sont décrits entre autres dans de nombreux brevets et demandes de brevets. tels que les brevets des Etats Unis US 5 139 707 et US 5 114 621 (R Guglielmetti, P. Tardieu) et la demande de brevet européen EP-0245020.

Bien évidemment, les additifs incorporés dans les articles ophtalmiques par le procédé de la présente invention ne doivent pas nuire aux propriétés optiques des articles obtenus.

Comme indiqué précédemment, une caractéristique importante du procédé de l'invention est la mise en contact de l'additif avec l'article ophtalmique dans un réacteur à l'état statique en présence d'un fluide à l'état supercritique.

On peut utiliser tout fluide à l'état supercritique qui est inerte vis-à-vis des matériaux constituant le substrat de polymères de l'article ophtalmique et du ou des additifs à introduire. Parmi .les fluides utilisables selon l'invention, on peut citer CO₂, NO₂, l'éthylène. l'éthane et le chlorotrifluorométhane.

Comme indiqué précédemment, un fluide particulièrement recommandé est le dioxyde de carbone (CO₂) car il est non toxique. peu coûteux et il peut être aisément recyclé.

Les conditions de température et de pression du fluide à l'état supercritique dépendront bien évidemment du point critique du fluide et de la nature des polymères du substrat et des additifs à incorporer. Toutefois, il est recommandé que la température du fluide à l'état supercritique soit inférieure de 30°C ou plus, de préférence inférieure à 50°C, à la température de transition vitreuse (Tg) dans les conditions normales du ou des polymères du substrat de l'article ophtalmique traité.

La durée du traitement dépendra bien évidemment des conditions de température et de pression du fluide à l'état supercritique, de la nature du substrat de polymères et de l'additif à incorporer, de la quantité et de la profondeur voulue pour l'incorporation de l'additif. En général, on a constaté qu'une durée de 1 à 30 minutes, de préférence de 5 à 20 minutes, et mieux de l'ordre de 10 à 15 minutes, était suffisante pour obtenir l'incorporation souhaitée.

Une fois l'incorporation de l'additif achevée, on élimine le fluide à l'état supercritique absorbé par le substrat. Cette élimination s'effectue aisément en ramenant le substrat à la pression atmosphérique provoquant ainsi la détente du gaz.

Le procédé selon l'invention présente de nombreux avantages. Il n'utilise pas de solvant, et par conséquent il évite des risques de pollution et supprime les coûts liés à l'élimination et au retraitement éventuels de solvants. Il permet une utilisation efficace de la quantité d'additifs car il peut être mis en oeuvre jusqu'à épuisement complet de la quantité d'additifs initialement introduite dans le réacteur et par conséquent évite les pertes et gaspillages d'additifs. Cet aspect économique du procédé selon l'invention est particulièrement intéressant pour l'incorporation d'additifs relativement coûteux tels que les substances photochromiques. En outre, le procédé selon l'invention permet un réglage de la quantité ainsi que de la profondeur d'incorporation de l'additif dans le substrat de polymères et en particulier permet d'obtenir une incorporation à coeur même dans des substrats d'épaisseurs notables. Ainsi, on peut réaliser des incorporations d'additifs, en particulier de colorants et substances photochromiques jusqu'à des profondeurs de 10 mm, de préférence de 1 à 2 mm.

A titre de comparaison, le procédé de transfert thermique ne permet d'incorporer des substances photochromiques qu'à des profondeurs de l'ordre de 150 µm.

Egalement, le procédé selon l'invention permet d'incorporer des additifs, en particulier des colorants et des substances photochromiques dans des substrats de polymères considérés jusqu'à présent comme difficilement ou même non colorables, tels que des substrats de polycarbonate ou des substrats revêtus d'une couche anti-abrasion et/ou anti-chocs.

Les exemples suivants illustrent la présente invention sans toutefois la limiter.

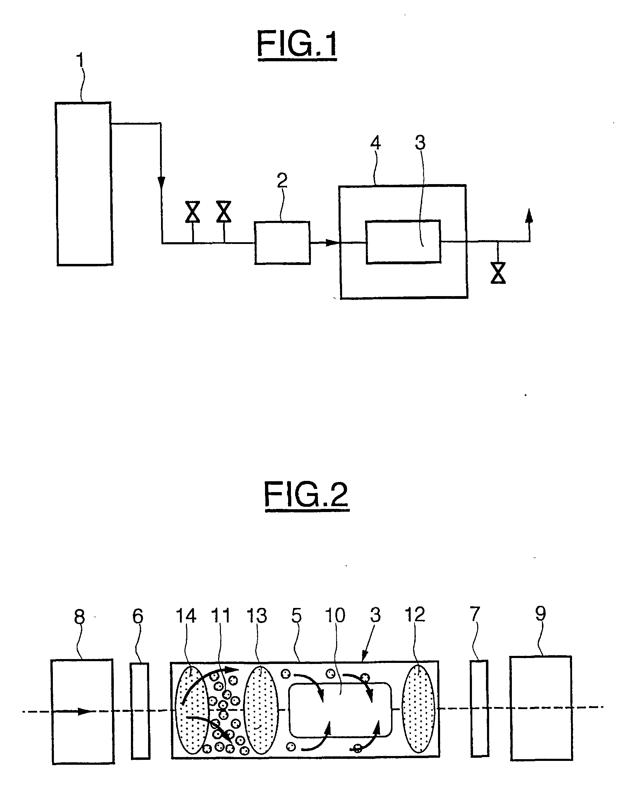

L'incorporation des additifs a été effectuée dans un dispositif de laboratoire représenté schématiquement aux figures 1 et 2.

Le dispositif représenté à la figure 1 comprend une source de CO₂ reliée à une pompe 2, elle-même reliée à un réacteur tubulaire haute pression 3 disposé dans un four 4.

Des vannes permettent d'isoler la source de CO₂ de la pompe 2 et du réacteur 3.

Comme on le voit à la figure 2, le réacteur 3 comprend un corps tubulaire 5 dont les deux extrémités sont fermées par des plaques en fritte de verre 6 et 7 et des bouchons 8 et 9. Le bouchon 8 est pourvu de moyens d'introduction de CO₂ et est relié à la pompe 2. A l'intérieur du corps tubulaire 5 du réacteur, un substrat transparent de polymères 10 pour article ophtalmique est disposé entre deux tampons de coton 12, 13, cependant qu'un additif 11 ou un mélange d'additifs, destiné à être incorporé dans le substrat est disposé dans le réacteur, à côté du substrat 10, entre le tampon de coton 13 et un troisième tampon de coton 14.

En fonctionnement, CO₂ est introduit à partir de la source 1 dans le réacteur 3 et amené à la pression supérieure à la pression critique et chauffé au moyen du four à une température voulue supérieure à la température critique. Le CO₂ est maintenu dans les conditions supercritiques choisies, à l'état statique, dans le réacteur 3 pendant un temps déterminé nécessaire à l'incorporation de l'additif. A la fin de l'incorporation, le CO₂ est éliminé du réacteur et du substrat en ramenant la pression et la température à la pression et température ambiantes (il s'agit généralement de la pression et de la température normales ou proche de la normale) et en laissant le CO₂ s'évacuer du substrat dans ces conditions ambiantes de pression et température. On récupère ensuite le substrat incorporant l'additif.

### EXEMPLES 1 à 3

On a traité dans le réacteur décrit ci-dessus trois éprouvettes de 1 mm d'épaisseur d'un substrat de polymère obtenu par polymérisation de la composition polymérisable suivante, décrite dans la demande de brevet WO 95/10790.

| Ingrédients de base | Parties en poids |
|---|---|
| Diméthacrylate d'éthoxy bis phénol A contenant 2,5 motifs éthoxy | 43,5 |
| Poly(éthylène glycol) de masse moléculaire 600 terminé aux deux extrémités par du méthacrylate | 21,0 |
| 1,3-diisopropényl benzène | 6,0 |
| 2-phénoxyéthyl méthacrylate | 20,5 |
| Poly(éthylèneglycol) de masse molaire 200 à terminaison benzoate aux deux extrémités | 8,7 |
| Triphényl phosphite | 0,3 |
| Diéthyl pyrocarbonate | 0,15 |

| Initiateur | |
|---|---|
| Diisopropyl peroxy dicarbonate | 1,5 |
| Tert-butyl peroxy 2-éthyl hexyl carbonate | 0,5 |

La composition polymérisable est coulée dans un moule à feuilles planes. Le moule est placé dans un four à circulation d'air et la composition est durcie en utilisant le cycle de durcissement suivant.

| Heures cumulées | Température du four °C |
|---|---|
| O | 34 |
| 24 | 36 |
| 32 | 44 |
| 34 | 46 |
| 36 | 48 |
| 38 | 50 |
| 40 | 54 |
| 42 | 58 |
| 44 | 64 |
| 46 | 69 |
| 48 | 85 |
| 49 | 105 |
| 49,5 | 130 |
| 50,5 | 130 (fin du cycle) |

On laisse le polymérisat refroidir dans le four jusqu'à environ 80°C puis on le retire et le démoule.

L'additif à incorporer était un mélange de substances photochromiques comprenant 55% en poids d'un composé de formule : 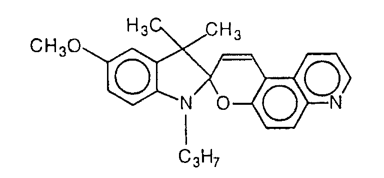 décrit dans la demande de brevet WO 90/12819 (colorant "bleu"), et 45% en poids d'un composé de formule : 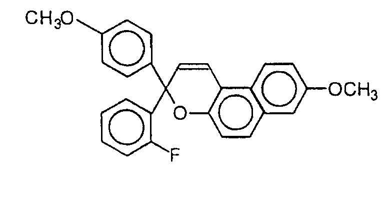 décrit dans la demande de brevet WO 90/17071 (colorant "orange").

On a placé dans le réacteur 100 mg du mélange ci-dessus.

Les conditions opératoires pour le CO₂ supercritique étaient les suivantes :
P = 20 MPa
T = 80°C
Masse volumique ρ_{CO2} = 0,6 g/cm³.

Chacune des éprouvettes des exemples 1 à 3 a été soumise à un temps de traitement différent, à savoir 5, 15 et 20 minutes, respectivement.

Les éprouvettes obtenues sont pratiquement colorées à coeur.

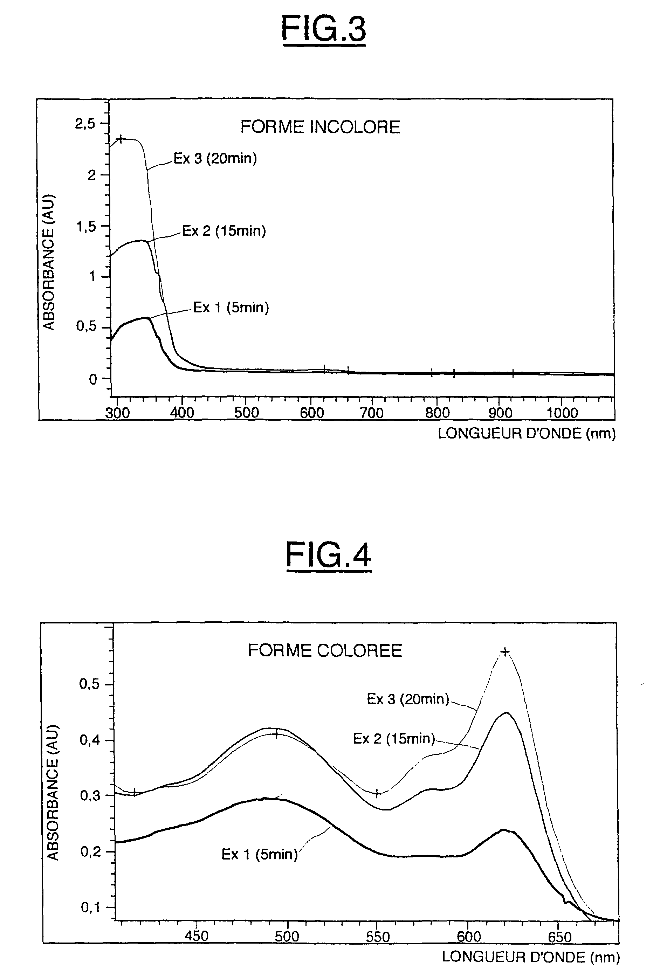

On a suivi, par spectroscopie UV, le degré d'imprégnation des substances photochromiques dans le substrat. Les résultats sont représentés aux figures 3 et 4.

On a irradié les éprouvettes avec une lampe Xénon, 0,9 mW/cm² (UV), 73 klux (visible), pendant 15 minutes (phase de coloration).

L'irradiation est alors stoppée. Il se produit une phase de décoloration.

On mesure la variation du pourcentage de transmission de l'éprouvette pendant les deux phases en se plaçant à la longueur d'onde λₘₐₓ correspondant à l'absorption maximale de chacune des substances photochromiques.

L'étude cinétique des substances photochromiques a été réalisée à 23°C à la longueur d'onde correspondant au maximum d'absorption de chacune des substances.

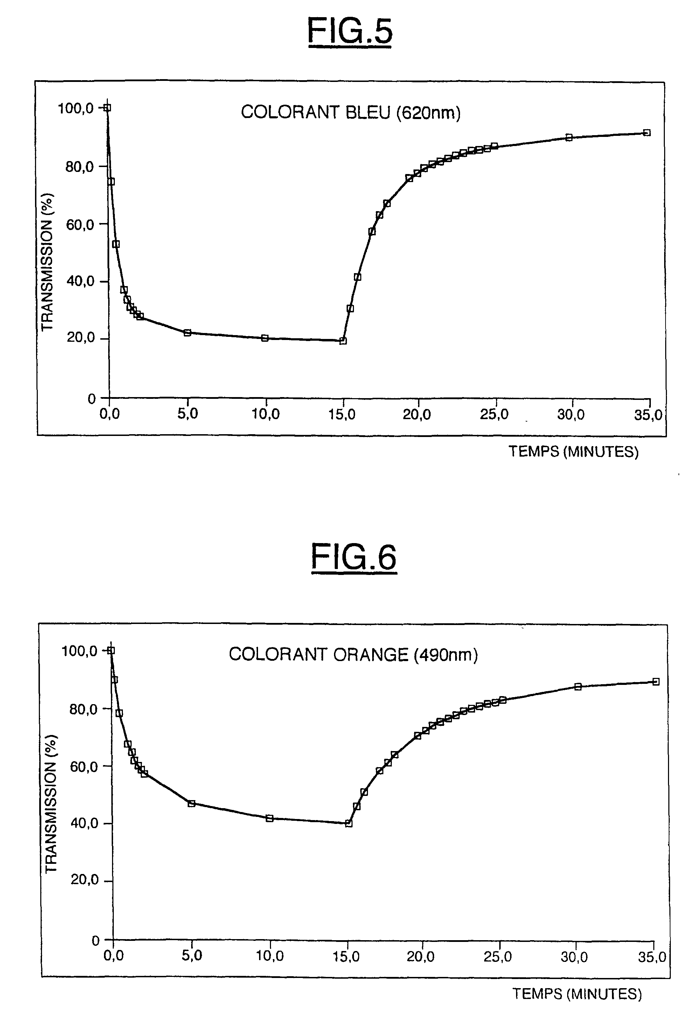

Les résultats sont indiqués dans les tableaux I et II et sur les figures 5 et 6.

**TABLEAU I**

| (Colorant "bleu") | | | |
|---|---|---|---|
| **Temps en minute** | **Temps en seconde** | **% de transmission** | **Absorbance** |
| 0.0 | 0 | 100.1 | 0.000 |
| 0.2 | 12 | 74.7 | 0.127 |
| 0.5 | 30 | 52.8 | 0.277 |
| 1.0 | 60 | 37.1 | 0.430 |
| 1.2 | 72 | 33.9 | 0.470 |
| 1.4 | 84 | 31.5 | 0.502 |
| 1.6 | 96 | 29.8 | 0.525 |
| 1.8 | 108 | 28.5 | 0.545 |
| 2.0 | 120 | 27.5 | 0.560 |
| 5.0 | 300 | 22.1 | 0.657 |
| 10.0 | 600 | 20.2 | 0.694 |
| 15.0 | 900 | 19.5 | 0.709 |
| 15.5 | 930 | 31.2 | 0.505 |
| 16.0 | 960 | 41.9 | 0.377 |
| 17.0 | 1020 | 57.9 | 0.237 |
| 17.5 | 1050 | 63.4 | 0.198 |
| 18.0 | 1080 | 67.8 | 0.169 |
| 19.5 | 1170 | 76.1 | 0.118 |
| 20.0 | 1200 | 77.9 | 0.108 |
| 20.5 | 1230 | 79.5 | 0.100 |
| 21.0 | 1260 | 80.8 | 0.093 |
| 21.5 | 1290 | 81.9 | 0.087 |
| 22.0 | 1320 | 82.9 | 0.081 |
| 22.5 | 1350 | 83.7 | 0.077 |
| 23.0 | 1380 | 84.6 | 0.073 |
| 23.5 | 1410 | 85.2 | 0.070 |
| 24.0 | 1440 | 85.8 | 0.066 |
| 24.5 | 1470 | 86.4 | 0.063 |
| 25.0 | 1500 | 86.9 | 0.061 |
| 30.0 | 1800 | 90.5 | 0.043 |
| 35.0 | 2100 | 92.5 | 0.034 |
| T1/2 de coloration | sec. | 45.2 | |
| T1/2 de décoloration | sec. | 69.9 | |
| mesure à 23°C 0.9mw/cm² 73klux à λ = 620 nm | | | |

**TABLEAU II**

| (Colorant "orange" ) | | | |
|---|---|---|---|
| **Temps en minute** | **Temps en seconde** | **% de transmission** | **Absorbance** |
| 0.0 | 0 | 100.1 | -0.001 |
| 0.2 | 12 | 89.5 | 0.048 |
| 0.5 | 30 | 78.0 | 0.108 |
| 1.0 | 60 | 67.1 | 0.173 |
| 1.2 | 72 | 64.2 | 0.193 |
| 1.4 | 84 | 61.9 | 0.208 |
| 1.6 | 96 | 59.9 | 0.223 |
| 1.8 | 108 | 58.1 | 0.236 |
| 2.0 | 120 | 56.8 | 0.246 |
| 5.0 | 300 | 46.2 | 0.335 |
| 10.0 | 600 | 41.7 | 0.380 |
| 15.0 | 900 | 40.1 | 0.396 |
| 15.5 | 930 | 46.2 | 0.335 |
| 16.0 | 960 | 50.9 | 0.293 |
| 17.0 | 1020 | 58.4 | 0.234 |
| 17.5 | 1050 | 61.4 | 0.212 |
| 18.0 | 1080 | 64.0 | 0.194 |
| 19.5 | 1170 | 70.5 | 0.152 |
| 20.0 | 1200 | 72.1 | 0.142 |
| 20.5 | 1230 | 73.8 | 0.132 |
| 21.0 | 1260 | 75.2 | 0.124 |
| 21.5 | 1290 | 76.4 | 0.117 |
| 22.0 | 1320 | 77.7 | 0.110 |
| 22.5 | 1350 | 78.8 | 0.104 |
| 23.0 | 1380 | 79.8 | 0.098 |
| 23.5 | 1410 | 80.6 | 0.094 |
| 24.0 | 1440 | 81.4 | 0.089 |
| 24.5 | 1470 | 82.2 | 0.085 |
| 25.0 | 1500 | 82.9 | 0.081 |
| 30.0 | 1800 | 87.5 | 0.058 |
| 35.0 | 2100 | 89.7 | 0.047 |
| T1/2 de coloration | sec. | 76.1 | |
| T1/2 de décoloration | sec. | 173.3 | |
| mesure à 23°C 0.9mw/cm² 73klux à λ = 490 nm | | | |

### Exemple 4

On a incorporé les mêmes substances photochromiques qu'aux exemples 1 à 3 dans un substrat de polycarbonate (Polycarbonate thermoplastique de la Société Dalloz).

On a incorporé initialement un plastifiant, le dioctylphtalate, en utilisant le même appareillage que précédemment et les conditions suivantes :
P = 20 MPa
T = 80°C
Masse volumique ρ_{CO2} = 0,6g/cm³
Durée : 15 minutes.

Les substances photochromiques sont ensuite incorporées de la même façon avec les conditions opératoires suivantes :
P = 20 MPa
T = 80°C
Durée : 15 minutes.

On détermine par pesée les quantités de plastifiant et de substances photochromiques incorporées. Une même quantité. d'environ 1% en poids, de plastifiant et de substances photochromiques a été incorporée.

### Exemple 5

On incorpore dans un substrat d'indice de réfraction 1,6. commercialisé par la Société ESSILOR sous la dénomination ORMIL® (matériau considéré comme présentant des difficultés importantes de coloration) les colorants primaires indiqués ci-dessous en utilisant l'appareillage décrit ci-dessus et les conditions de réaction suivantes pour le CO₂ supercritique :
P = 40 MPa
T = 120°C
Masse volumique ρ_{CO2} = 0,75 g/cm³.

La durée de traitement est de 10 minutes. On obtient une coloration intense du matériau.

### Structure des colorants primaires

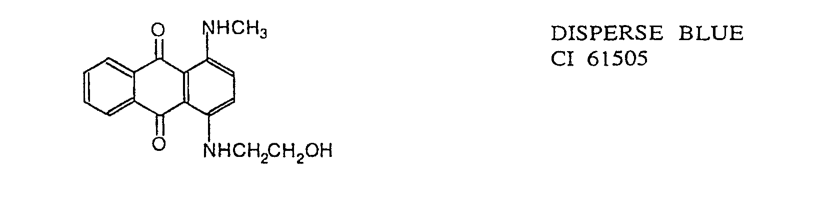

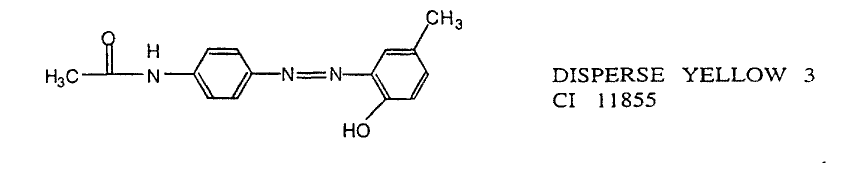

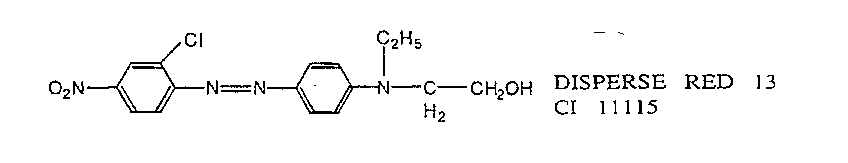

### Exemple 6

On soumet des éprouvettes comprenant un substrat constitué du matériau commercialisé par la Société ESSILOR sous la dénomination ORMA® (polymère de diéthylèneglycol bis(allylcarbonate)) pourvu d'un revêtement anti-abrasion de 3 µm d'épaisseur (vernis décrit dans l'exemple 3 du document EP-A-0614957), revêtement pratiquement incolorable, à un traitement d'incorporation du colorant "Disperse Red 13" comme dans les exemples précédents avec les conditions suivantes pour le CO₂ supercritique :
P = 40 MPa
T = 120°C
Masse volumique ρ_{CO2} = 0,75 g/cm³.

La durée de traitement est de 10 minutes. On obtient une coloration de l'éprouvette.

### Exemple 7

On a traité des lentilles de contact en polyméthacrylate de méthyle (PMMA), ayant une épaisseur de 160 µm, comme décrit précédemment pour y incorporer le colorant "Disperse Red 13", les paramètres optiques des lentilles, les conditions du CO₂ supercritique et de traitement, et les résultats sont indiqués dans le tableau III ci-dessous.

**TABLEAU III**

| Exemple N° | Paramètres optiques de la lentille | | | CO₂ supercritique | | | Durée du traitement | Coloration | observations |
|---|---|---|---|---|---|---|---|---|---|
| | puissance | ro | diamètre ⌀ | T(°C) | P(MPa) | ρ(g/cm³) | (min) | | |
| 7 | - 1,75 | 7,70 | 8,50 | 60 | 8,5 | 0,217 | 10 | rouge transmission Tv = 90% | non déformée-apparition d'un cylindre |

## Revendications

1. Procédé d'incorporation d'additifs (11) dans un article ophtalmique fini ou semi-fini comprenant un substrat transparent de polymères(10), **caractérisé en ce qu'**il comprend :
- l'introduction dans un réacteur (3) contenant l'article ophtalmique et l'additif à incorporer d'un fluide à l'état supercritique inerte vis-à-vis des matériaux du substrat (10) et des additifs;
- le maintien de ce fluide à l'état supercritique dans le réacteur (3) à l'état statique, pendant une durée prédéterminée pour obtenir l'incorporation de l'additif dans le substrat de polymères (10) de l'article ophtalmique jusqu'à une profondeur prédéterminée;
- l'élimination du fluide à l'état supercritique; et
- la récupération de l'article ophtalmique dans lequel l'additif a été incorporé.

2. Procédé selon la revendication 1, **caractérisé en ce que** l'additif est choisi dans le groupe constitué par les plastifiants, les antioxydants, les colorants, les substances photochromiques, les absorbeurs UV et leurs mélanges.

3. Procédé de photochromisation d'un article ophtalmique fini ou semi-fini comprenant un substrat transparent de polymères (10) qui comprend :
A. une première étape comportant :
• la mise en place dans un réacteur (3) d'un substrat transparent de polymères (10) et d'un plastifiant du substrat,
• l'introduction dans le réacteur (3) d'un fluide à l'état supercritique inerte vis-à-vis des matériaux du substrat (10) et du plastifiant;
• le maintien du fluide à l'état supercritique dans le réacteur (3) à l'état statique, pendant une durée prédéterminée pour obtenir l'incorporation du plastifiant dans le substrat de polymères (10), et
• l'élimination du fluide supercritique ; et
B. une second étape comportant :
• la mise en place dans le réacteur (3) contenant le substrat de polymères plastifié d'un ou plusieurs composés photochromiques,
• l'introduction d'un fluide à l'état supercritique inerte vis-à-vis des matériaux du substrat (10) et du ou des composés photochromiques.
• le maintien du fluide à l'état supercritique dans le réacteur (3) à
l'état statique, pendant une durée prédéterminée pour obtenir l'incorporation du ou des composés photochromiques dans le substrat de polymères plastifié de l'article ophtalmique jusqu'à une profondeur prédéterminée,
• l'élimination du fluide supercritique, et
• la récupération de l'article ophtalmique dans lequel sont incorporés le ou les composés photochromiques.

4. Procédé selon l'une quelconque des revendications 1 à 3, **caractérisé en ce que** les polymères du substrat transparent sont choisis parmi les polymères allyliques, les polymères de polyol(allylcarbonates), les polyacrylates, les poly(alkylacrylates), les polymères vinyliques, les polyuréthannes, les polythiouréthannes, les polycarbonates.

5. Procédé selon l'une quelconque des revendications 1 à 4, **caractérisé en ce que** la température du fluide à l'état supercritique est inférieure d'au moins 30°C à la température de transition vitreuse, dans les conditions normales, du ou des polymères du substrat.

6. Procédé selon la revendication 5, **caractérisé en ce que** la température du fluide à l'état supercritique est inférieure de 50°C à la température de transition vitreuse, dans les conditions normales, du ou des polymères du substrat.

7. Procédé selon l'une quelconque des revendications précédentes, **caractérisé en ce que** la durée de maintien du fluide à l'état supercritique dans le réacteur est comprise entre 1 et 30 minutes. de préférence 5 à 20 minutes.

8. Procédé selon l'une quelconque des revendications précédentes, **caractérisé en ce que** le fluide à l'état supercritique est le dioxyde de carbone.

9. Procédé selon l'une quelconque des revendications précédentes, **caractérisé en ce que** l'article ophtalmique est un verre de lunette.

10. Procédé selon l'une quelconque des revendications précédentes, **caractérisé en ce que** l'article ophtalmique est une lentille de contact.

## Patentansprüche

1. Verfahren zur Einbettung von Additiven (11) in einem fertigen oder halbfertigen ophtalmischen Gegenstand, umfassend ein transparentes Polymersubstrat (10), **dadurch gekennzeichnet, dass** das Verfahren umfasst:
- das Einführen eines im überkritischen Zustand vorliegenden Fluides, welches inert bezüglich Materialien des Substrates (10) und den Additiven ist, in einen Reaktor (3), der den ophtalmischen Gegenstand und das einzubettende Additiv enthält;
- Beibehalten des Fluids in über- oder superkritischem Zustand in dem Reaktor (3) in einem statischen Zustand, während einer vorbestimmten Dauer, um die Einbettung des Additivs in dem Polymersubstrat (10) des ophtalmischen Gegenstands bis hin zu einer vorbestimmten Tiefe zu erhalten;
- die Eliminierung des Fluids im überkritischen Zustand; und
- die Entnahme des ophtalmischen Gegenstands, in welchem das Additiv eingebettet wurde.

2. Verfahren nach Anspruch 1, **dadurch gekennzeichnet, dass** das Additiv ausgewählt ist, unter einer Gruppe gebildet aus Weichmachern, Antioxidanten, Färbe- oder Farbmitteln, photochromatischen Substanzen, UV-Absorbem und deren Mischungen.

3. Verfahren zur Photochromatierung eines ophtalmischen fertigen oder halbfertigen Gegenstandes, umfassend ein transparentes Polymersubstrat (10), wobei das Verfahren umfasst:
A. einen ersten Schritt, umfassend:
- die Anordnung eines transparenten Polymersubstrates (10) sowie eines Substrat-Weichmachers des Substrates in einem Reaktor (3),
- Einführen eines Fluids im überkritischen Zustand, welches inert gegenüber Materialien des Substrates (10) und des Weichmachers oder Plastifikators ist, in den Reaktor (3),
- das Aufrechterhalten des Fluids im über- oder superkritischen Zustand in dem Reaktor (3) im statischen Zustand während einer vorbestimmten Dauer, um die Einbettung des Weichmachers in dem Polymersubstrat (10) zu erhalten, und
- die Eliminierung des überkritischen Fluids; und
B. einen zweiten Schritt, umfassend:
- die Anordnung einer oder mehrerer photochromatischer Verbindungen oder Zusammensetzungen in dem Reaktor (3), der das plastifizierte oder Weichmacher enthaltende Polymersubstrat enthält,
- die Einführung eines Fluids im überkritischen Zustand, welches gegenüber Materialien des Substrates (10) und der oder den photochromatischen Verbindung(en) inert ist,
- das Beibehalten des Fluids im überkritischen Zustand in dem Reaktor (3) im statischen Zustand, während einer vorbestimmten Dauer, um die Einbettung des oder der photochromatischen Verbindung(en) im Substrat des plastifizierten oder Weichmacher enthaltenden Polymers des ophtalmischen Gegenstandes bis hin zu einer vorbestimmten Tiefe zu erhalten,
- die Eliminierung des überkritischen Fluids, und
- die Entnahme des ophtalmischen Gegenstands, in welchem die photochromatische(n) Verbindung(en) enthalten ist/sind.

4. Verfahren nach einem der Ansprüche 1 bis 3, **dadurch gekennzeichnet, dass** die Polymere des transparenten Substrats ausgewählt sind unter allylischen Polymeren, Polyalkohol-(Allylcarbonat)-Polymeren, Polyacrylaten, Polyalkylacrylaten, Vinylpolymeren, Polyuretanen, Polythiouretanen, Polycarbonaten.

5. Verfahren nach einem der Ansprüche 1 bis 4, **dadurch gekennzeichnet, dass** die Temperatur des Fluids im überkritischen Zustand um zumindest 30°C niedriger als die Verglasungsübergangstemperatur unter Normalbedingungen von dem oder den Polymer(en) des Substrats ist

6. Verfahren nach Anspruch 5, **dadurch gekennzeichnet, dass** die Temperatur des Fluids im überkritischen Zustand um 50°C niedriger als die Verglasungsübergangstemperatur unter Normalbedingungen des oder der Polymere des Substrats ist

7. Verfahren nach einem der vorangegangenen Ansprüche, **dadurch gekennzeichnet, dass** die Dauer der Aufrechterhaltung des Fluids im überkritischen Zustand im Reaktor 1 bis 30 Minuten beträgt, insbesondere 5 bis 20 Minuten.

8. Verfahren nach einem der vorangegangenen Ansprüche, **dadurch gekennzeichnet, dass** das Fluid im überkritischen Zustand Kohlenstoffdioxid ist

9. Verfahren nach einem der vorangegangenen Ansprüche, **dadurch gekennzeichnet, dass** der ophtalmische oder ophtalmologische Gegenstand ein Brillenglas ist.

10. Verfahren nach einem der vorangegangenen Ansprüche, **dadurch gekennzeichnet, dass** der ophtalmische oder ophtalmologische Gegenstand eine Kontaktlinse ist

## Claims

1. Method for incorporating additives (11) in a finished or semifinished ophthalmic article comprising a transparent polymer substrate (10), **characterized in that** it comprises :
- the introduction of a fluid in the supercritical state which is inert with the materials of the substrate (10) and additives into a reactor (3) containing the ophthalmic article and the additive to be incorporated ;
- the maintenance of this fluid in the supercritical state in the reactor (3), in the static state, for a predetermined period of time, in order to obtain the incorporation of the additive in the polymer substrate (10) of the ophthalmic article to a predetermined depth ;
- the removal of the fluid in the supercritical state ; and
- the recovery of the ophthalmic article in which the additive has been incorporated.

2. Method according to Claim 1, **characterized in that** the additive is selected from the group composed of plasticizers, antioxidants, dyes, photochromic substances, UV absorbers and their mixtures.

3. Method for the photochromization of a finished or semifinished ophthalmic article comprising a transparent polymer substrate (10) which comprises :
A. A first step comprising :
• the insertion into a reactor (3) of a transparent polymer substrate (10) and of a platicizer for the substrate,
• the introduction into the reactor (3) of a fluid in the supercritical state, which is inert with the materials of the substrate and plasticizer,
• the maintenance of the fluid in the supercritical state in the reactor (3), in the static state, for a predetermined period of time, in order to obtain the incorporation of the platicizer in the polymer substrate (10), and
• the removal of the supercritical fluid ; and
B. A second step comprising :
• the insertion into the reactor (3) containing the plasticized polymer substrate of one or more photochromic compounds,
• the introduction of a fluid in the supercritical state, which is inert with the materials of the substrate (10) and the photochromic component(s),
• the maintenance of the fluid in the supercritical state in the reactor (3), in the static state, for a predetermined period of time, in order to obtain the incorporation of the photochromic component or components in the platicized polymer substrate of the ophthalmic article to a predetermined depth,
• the removal of the supercritical fluid, and
• the recovery of the ophthalmic article in which the photochromic component or components are incorporated.

4. Method according to any one of Claims 1 to 3, **characterized in that** the polymers of the transparent substrate are selected from allylic polymers, polyol (allyl carbonate) polymers, polyacrylates, poly(alkyl acrylate)s, vinyl polymers, polyurethanes, polythiourethanes or polycarbonates.

5. Method according to any one of Claims 1 to 4, **characterized in that** the temperature of the fluid in the supercritical state is lower by at least 30°C than the glass transition temperature, under normal conditions, of the polymer or polymers of the substrate.

6. Method according to Claim 5, **characterized in that** the temperature of the fluid in the supercritical state is lower by 50°C than the glass transition temperature, under normal conditions, of the polymer or polymers of the substrate.

7. Method according to any one of the preceding claims, **characterized in that** the duration of maintenance of the fluid in the supercritical state in the reactor is between 1 and 30 minutes, preferably 5 to 20 minutes.

8. Method according to any one of the preceding claims, **characterized in that** the fluid in the supercritical state is carbon dioxide.

9. Method according to any one of the preceding claims, **characterized in that** the ophthalmic article is a spectacle lens.

10. Method according to any one of the preceding claims, **characterized in that** the ophthalmic article is a contact lens.
